(19) Europäisches Patentamt / European Patent Office / Office européen des brevets

(11) EP 4 657 662 A1

(12) **EUROPEAN PATENT APPLICATION**
published in accordance with Art. 153(4) EPC

(43) Date of publication:
03.12.2025 Bulletin 2025/49

(21) Application number: 23918514.3

(22) Date of filing: 27.10.2023

(51) International Patent Classification (IPC):
$H01Q\ 15/02^{(2006.01)}$ $G01S\ 7/03^{(2006.01)}$
$H01Q\ 19/06^{(2006.01)}$

(52) Cooperative Patent Classification (CPC):
H01Q 15/08; G01S 7/027; G01S 7/03; H01Q 1/42;
H01Q 15/02; H01Q 15/06; H01Q 19/06;
H01Q 19/062

(86) International application number:
PCT/JP2023/038844

(87) International publication number:
WO 2024/157559 (02.08.2024 Gazette 2024/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.01.2023 JP 2023008359

(71) Applicant: Alps Alpine Co., Ltd.
Tokyo 145-8501 (JP)

(72) Inventor: TO, Gensyu
Tokyo 145-8501 (JP)

(74) Representative: Maiwald GmbH
Engineering
Elisenhof
Elisenstrasse 3
80335 München (DE)

(54) **RADIO WAVE LENS, RADIO WAVE LENS DEVICE, AND RADAR APPARATUS**

(57) A radio wave lens, a radio wave lens apparatus, and a radar apparatus that are resistant to dust adhesion on one surface and capable of sufficiently reducing reflection are provided.

A radio wave lens includes a first surface, a second surface, and an optical axis passing through the first surface and the second surface. The first surface has concave portions or convex portions provided concentrically or symmetrically with respect to the optical axis in plan view, and a depth of each of the concave portions or a height of each of the convex portions is set according to a distance from the optical axis.

FIG. 1D

EP 4 657 662 A1

**Description**

Technical Field

The present disclosure relates to a radio wave lens, a radio wave lens apparatus, and a radar apparatus.

Background Art

Known dielectric lenses include a dielectric body and a matching layer formed on the surface of the dielectric body. Such a matching layer has grooves of a predetermined depth that are spirally provided on the surface of the dielectric body. In addition, a filling material having a refractive index of approximately one is filled in the grooves, and the depth of the groove is set to A/4 with respect to the wavelength $\lambda$ of the target radio wave (see, for example, Patent Literature 1).

Citation List

Patent Literature

PTL 1: Japanese Unexamined Patent Application Publication No. 11-355035

Summary of Invention

Technical Problem

Such known dielectric lenses (radio wave lenses) have the filling material filled in the grooves, thereby suppressing dust and other particles from accumulating in the grooves. However, such radio wave lenses are provided with the grooves of the uniform depth of $\lambda/4$ on both surfaces of the lenses and the filling material is filled, and therefore, it is difficult to manufacture, resulting in increased cost.
Accordingly, a radio wave lens, a radio wave lens apparatus, and a radar apparatus that are resistant to dust adhesion on one surface and capable of sufficiently reducing reflection are provided.

Solution to Problem

A radio wave lens according to an aspect of the disclosure includes a first surface, a second surface, and an optical axis passing through the first surface and the second surface. The first surface has concave portions or convex portions provided concentrically or symmetrically with respect to the optical axis in plan view, and a depth of each of the concave portions or a height of each of the convex portions is set according to a distance from the optical axis.

Advantageous Effects of Invention

A radio wave lens, a radio wave lens apparatus, and a radar apparatus that are resistant to dust adhesion on one surface and capable of sufficiently reducing reflection can be provided.

Brief Description of Drawings

[Fig. 1A] Fig. 1A is a diagram of an example structure of a radar apparatus according to an embodiment.
[Fig. 1B] Fig. 1B is a diagram of an example structure of a radar apparatus according to an embodiment.
[Fig. 1C] Fig. 1C is a diagram of an example structure of a radar apparatus according to an embodiment.
[Fig. 1D] Fig. 1D is a cross-sectional view obtained by cutting a radio wave lens of a radar apparatus according to an embodiment in a YZ plane including an optical axis of the radio wave lens.
[Fig. 2A] Fig. 2A is a diagram explaining one example reason for multiple reflections occurring in a comparative radio wave lens.
[Fig. 2B] Fig. 2B is a diagram explaining one example reason for multiple reflections occurring in a comparative radio wave lens.
[Fig. 2C] Fig. 2C is a diagram explaining one example reason for multiple reflections occurring in a comparative radio wave lens.
[Fig. 2D] Fig. 2D is a diagram explaining one example reason for multiple reflections occurring in a comparative radio wave lens.

[Fig. 3A] Fig. 3A is a diagram explaining one example principle of reducing multiple reflections by using a radio wave lens according to an embodiment.

[Fig. 3B] Fig. 3B is a diagram explaining one example principle of reducing multiple reflections by using a radio wave lens according to an embodiment.

[Fig. 3C] Fig. 3C is a diagram explaining one example principle of reducing multiple reflections by using a radio wave lens according to an embodiment.

[Fig. 4] Fig. 4 is a diagram explaining a thickness t and other details of a radio wave lens according to an embodiment.

[Fig. 5A] Fig. 5A is a diagram of an example output strength of a radar detection signal with respect to a distance between a radar apparatus according to an embodiment and a measurement target.

[Fig. 5B] Fig. 5B is a diagram of an example output strength of a radar detection signal with respect to a distance between a comparative radar apparatus and a measurement target.

[Fig. 5C] Fig. 5C is a diagram of an example output strength of a radar detection signal with respect to a distance between a radar apparatus according to an embodiment and a measurement target.

[Fig. 5D] Fig. 5D is a diagram of an example output strength of a radar detection signal with respect to a distance between a comparative radar apparatus and a measurement target.

[Fig. 6A] Fig. 6A is a diagram of an example simulation result of gains of a transmitting and receiving antenna of a radar apparatus according to an embodiment.

[Fig. 6B] Fig. 6B is a diagram of an example simulation result of gains of a transmitting and receiving antenna of a comparative radar apparatus.

[Fig. 7A] Fig. 7A is a diagram of an example structure of a radio wave lens according to a modification of an embodiment.

[Fig. 7B] Fig. 7B is a diagram of an example structure of a radio wave lens according to a modification of an embodiment.

Description of Embodiments

Hereinafter, a radio wave lens, a radio wave lens apparatus, and a radar apparatus according to an embodiment of the disclosure will be described.

<Embodiment>

<Structure of Radar Apparatus 100>

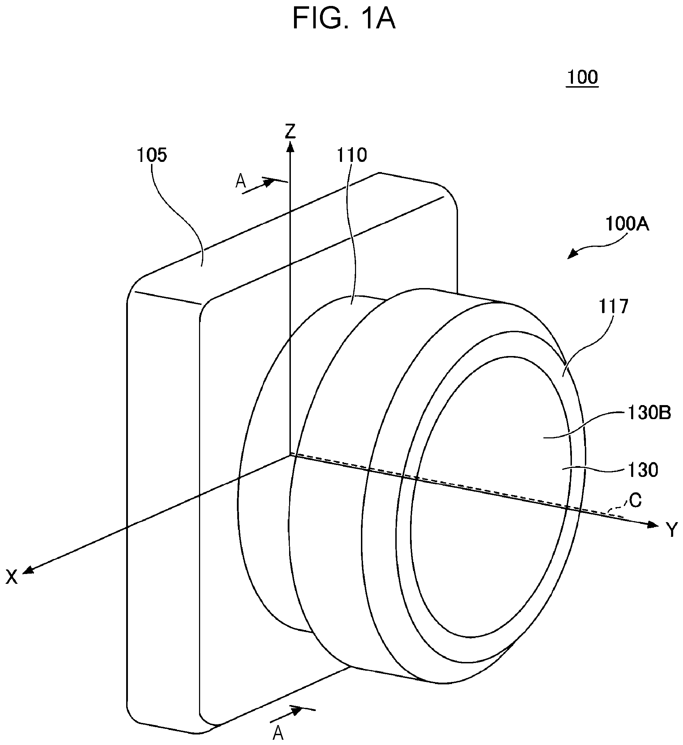

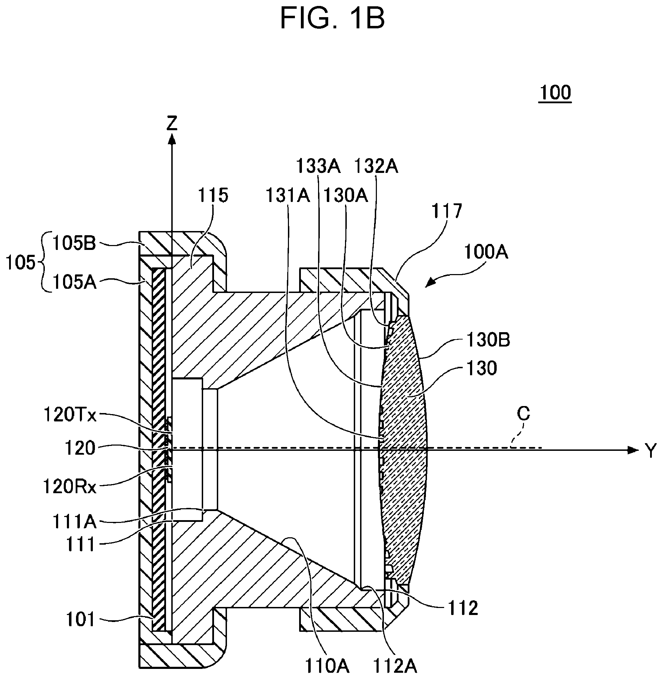

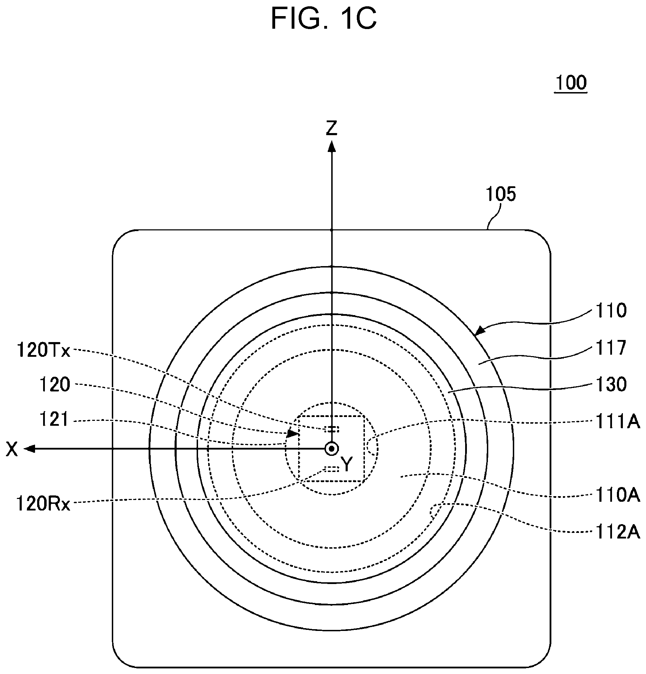

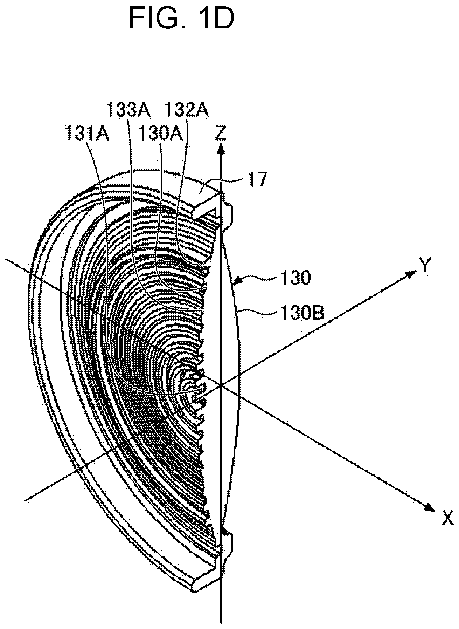

Fig. 1A, Fig. 1B, and Fig. 1C are diagrams of a radar apparatus 100 according to the embodiment. Fig. 1A is a perspective view, Fig. 1B is a cross-sectional view taken along line A-A in Fig. 1A, and Fig. 1C is a front view. Fig. 1D is a cross-sectional view obtained by cutting a radio wave lens 130 of the radar apparatus 100 in a YZ plane including an optical axis of the radio wave lens 130.

In the following description, an XYZ coordinate system is defined and described. For the sake of convenience, a -Z direction side denotes a lower side or bottom, and a +Z direction side denotes an upper side or top. However, this does not represent a universal vertical relationship. Viewing an XZ plane is referred to as a plan view. In addition, viewing an aperture in XZ plane is referred to as an aperture view.

The radar apparatus 100 includes a board 101, a waveguide 110, a transmission/reception unit 120, and the radio wave lens 130. Here, a radio wave lens apparatus 100A according to the embodiment is a radio wave lens apparatus obtained by omitting the board 101 and the transmission/reception unit 120 from the radar apparatus 100. The radio wave lens apparatus 100A includes the waveguide 110 and the radio wave lens 130.

The radar apparatus 100 is an apparatus that transmits and receives radio waves, and it narrows down a radiation pattern of transmitted waves using the radio wave lens 130 and focuses received radio waves using a lens. The radar apparatus 100 includes the radio wave lens 130 that is configured to reduce multiple-reflected waves generated by internal multiple reflections.

Such a radar apparatus 100 may be used, for example, as a radar apparatus that receives reflected waves that are transmitted and reflected back from a measurement target, and measures the distance to the measurement target. The distance to the measurement target can be determined based on the time from the transmission of radio waves as transmitted waves to the reception of the radio waves as reflected waves. Generally, the detection accuracy of a radar apparatus for measuring a distance to a measurement target decreases due to the effects of multiple reflections as the measurement target becomes closer. This is because the closer the measurement target is, the shorter the round-trip time becomes, making it harder to distinguish between the received waves that have not undergone multiple reflection and the multiple-reflected waves. As detection accuracy decreases, the minimum detectable distance (minimum detection distance) increases. The radar apparatus 100 according to the embodiment solves such problems.

The multiple-reflected waves refer to radio waves that are reflected two or more times within a space surrounded by the board 101, the waveguide 110, the transmission/reception unit 120, and the radio wave lens 130. For example, radio waves that are transmitted in the +Y direction from the transmission/reception unit 120 may be reflected by a surface of the radio wave lens 130 on the -Y direction side without passing through the radio wave lens 130 and cause multiple-reflected waves. For example, radio waves that pass through the radio wave lens 130 to the -Y direction side may be reflected by an inner wall surface 110A of the waveguide 110 or other portions without directly reaching the transmission/reception unit 120 and cause multiple-reflected waves.

These radio waves transmitted and received by the radar apparatus 100 are, for example, radio waves in the millimeter wave band. The millimeter waves are radio waves in the frequency band of 30 GHz to 300 GHz, and behave in a similar way to light. Note that the radio waves transmitted and received by the radar apparatus 100 may be radio waves of frequencies that belong to bands other than the millimeter wave band.

<Structure of Board 101>

The board 101 is a board on which the transmission/reception unit 120 is mounted, and is, for example, a wiring board complying with the Flame Retardant type 4 (FR-4) standard may be used. The board 101 is fixed to the -Y direction side of the waveguide 110.

<Structure of Waveguide 110>

The waveguide 110 is, for example, a cylindrical, hollow circular waveguide. The waveguide 110 has an aperture 111, an aperture 111A, an aperture 112, an aperture 112A, the inner wall surface 110A, and an attachment section 115. The inside of the waveguide 110 serves as a waveguide through which radio waves propagate. The inner wall surface 110A is an example first inner wall surface, the aperture 111 is an example first aperture, and the aperture 112 is an example second aperture. The aperture 111A is closer to the aperture 112 than the aperture 111, and the aperture 112A is closer to the aperture 111 than the aperture 112. The centers of the apertures 111, 111A, 112, and 112A are aligned with each other in aperture view. The +Y direction is an example radiation direction of a transmitting antenna 120Tx of the transmission/reception unit 120.

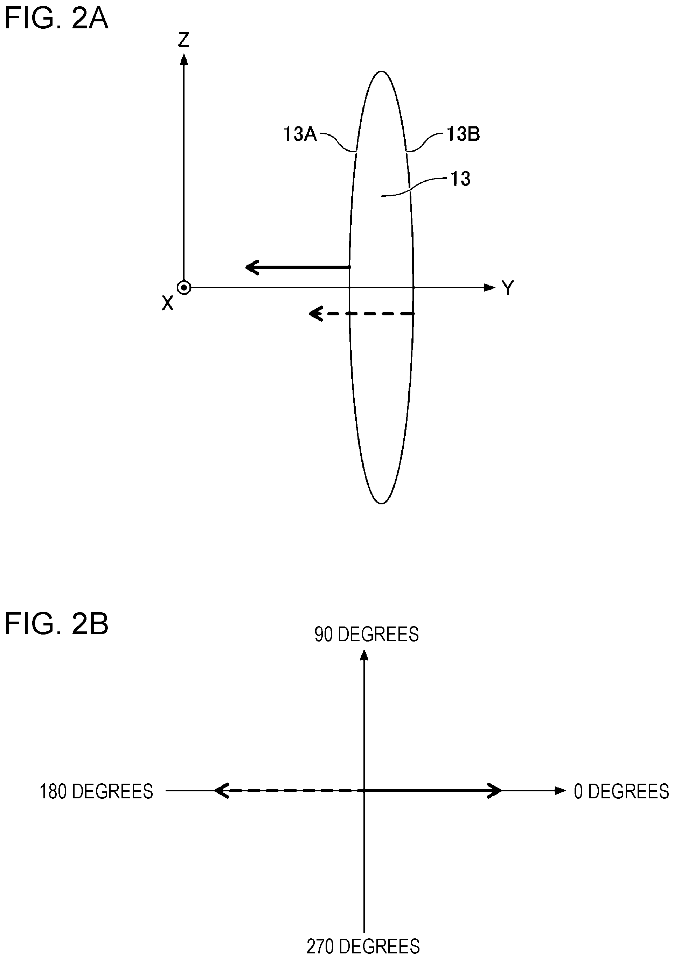

In Fig. 1A, Fig. 1B, Fig. 1C, and Fig. 2A, the origin of the XYZ coordinates is aligned with the center of the aperture 111, and a central axis C of the waveguide 110 is aligned with the Y-axis. The central axis C is also aligned with an optical axis of the radio wave lens 130. In the drawings, for ease of viewing, the central axis C and the Y-axis are shifted.

The inner wall surface 110A is an inner wall surface of the cylindrical, hollow waveguide 110. The inner wall surface 110A has, for example, between the aperture 111A and the aperture 112A, a substantially truncated conical shape that widens toward the +Y direction. In the inner wall surface 110A, a diameter on the aperture 111 side is larger than that of the aperture 111A, and between the aperture 112A and the aperture 112, the diameter is constant.

The aperture 111 is an aperture located at an end of the waveguide 110 on the -Y direction side. The aperture 111 is circular in aperture view. The aperture 111A is closer to the aperture 112 than the aperture 111, and the aperture 111A is circular in aperture view. The aperture 111A is smaller than the apertures 111, 112, and 112A, and is an aperture that surrounds the transmitting antenna 120Tx and a receiving antenna 120Rx in aperture view.

The aperture 112 is an aperture located at an end of the waveguide 110 on the +Y direction side. The section that functions as the waveguide 110 through which radio waves propagate is a section between the aperture 111 and the aperture 112.

The aperture 112 is circular in aperture view. The aperture 112A is closer to the aperture 111 than the aperture 112, and the aperture 112A is circular in aperture view. The aperture diameter of the aperture 112 is, for example, equal to the aperture diameter of the aperture 112A, and is larger than the aperture diameters of the apertures 111 and 111A. The radio wave lens 130 is attached to the aperture 112 by an attachment section 117.

The attachment section 115 is a section that extends outward in plan view at the end of the waveguide 110 on the -Y direction side, and for example, has a square outer edge in plan view. The attachment section 115 is provided to attach the board 101 to the waveguide 110. The outer edge of the attachment section 115 in plan view is held by a frame portion 105B of a cover 105 that covers a rear side (-Y direction side) of the board 101. The attachment section 115 is made of, for example, resin.

The attachment section 117 is a frame-shaped member for attaching the radio wave lens 130 to the waveguide 110 at the end of the waveguide 110 on the +Y direction side. The attachment section 117 is circular in plan view, and is fitted onto an outer circumferential surface of the waveguide 110 on the +Y direction side. The attachment section 117 holds the radio wave lens 130 at a position on the +Y direction side of the aperture 112. In a state in which the radio wave lens 130 is held by the attachment section 117, the optical axis of the radio wave lens 130 is aligned with the central axis C of the waveguide 110. The attachment section 117 is made of, for example, resin.

In a state in which the radio wave lens 130 is attached to the waveguide 110 by using the attachment section 117 as described above, a focal point of the radio wave lens 130 is positioned at the center of the aperture 111 in aperture view. In other words, the length of the waveguide 110 in the extending direction of the central axis C is set such that the focal point of the radio wave lens 130 is positioned on the aperture surface of the aperture 111.

<Structure of Transmission/reception Unit 120>

The transmission/reception unit 120 is mounted on a surface of the board 101 on the +Y direction side. The transmission/reception unit 120 is an example integrated circuit chip. The transmission/reception unit 120 includes a substrate 121, the transmitting antenna 120Tx, and the receiving antenna 120Rx. The substrate 121 is smaller than the board 101 in plan view and is square, for example. The substrate 121 is disposed at a central portion of the aperture 111 in plan view. More specifically, the substrate 121 is disposed such that a center of the substrate 121 in plan view is positioned on the central axis C. The position of the surface of the substrate 121 on the +Y direction side in the Y direction is aligned with the position of the aperture 111 in the Y direction.

The transmitting antenna 120Tx and the receiving antenna 120Rx are spaced apart in the Z direction on the surface of the substrate 121 on the +Y direction side. The transmitting antenna 120Tx and the receiving antenna 120Rx are, for example, antennas that have the same shape and the same size. The transmitting antenna 120Tx transmits radio waves through the waveguide 110, and the receiving antenna 120Rx receives radio waves through the waveguide 110.

The transmitting antenna 120Tx and the receiving antenna 120Rx are disposed to be symmetrical in plan view with respect to the central axis C. Viewing the transmitting antenna 120Tx and the receiving antenna 120Rx in plan view is equivalent to viewing the transmitting antenna 120Tx and the receiving antenna 120Rx in aperture view (plan view) of the aperture 111.

The phrase that the transmitting antenna 120Tx and the receiving antenna 120Rx are symmetrical in plan view with respect to the central axis C means that a center of the transmitting antenna 120Tx in plan view and a center of the receiving antenna 120Rx in plan view are symmetrical in plan view with respect to the central axis C. The center of the transmitting antenna 120Tx in plan view and the center of the receiving antenna 120Rx in plan view are both located on the Z-axis. The central axis C is aligned with the optical axis of the radio wave lens 130, and the transmitting antenna 120Tx and the receiving antenna 120Rx are disposed to be shifted from the optical axis of the radio wave lens 130.

In addition, the center of the transmitting antenna 120Tx in plan view and the center of the receiving antenna 120Rx in plan view are both located on the Z-axis, and are disposed to be symmetrical in plan view with respect to the central axis C. With this structure, in the cross-section obtained by cutting the waveguide 110 in the YZ plane including the optical axis of the radio wave lens 130, the transmitting antenna 120Tx and the receiving antenna 120Rx are disposed to be symmetrical with respect to the central axis C.

It is not possible to dispose the transmitting antenna 120Tx and the receiving antenna 120Rx on the central axis C (optical axis of the radio wave lens 130), and thus the transmitting antenna 120Tx and the receiving antenna 120Rx are disposed in this manner to match the transmission and reception characteristics. The transmitting antenna 120Tx and the receiving antenna 120Rx may be implemented by using, for example, loop antennas, patch antennas, monopole antennas, dipole antennas, or other antennas.

In other words, since the length of the waveguide 110 in the extending direction of the central axis C is set such that the focal point of the radio wave lens 130 is positioned on the aperture surface of the aperture 111, the positions of the transmitting antenna 120Tx and the receiving antenna 120Rx on the optical axis (central axis C of the waveguide 110) of the radio wave lens 130 in the extending direction are equal to the position of the focal point of the radio wave lens 130. In addition, a position of the surface of the substrate 121 on the +Y direction side in the Y direction is aligned with the position of the aperture 111 in the Y direction. Accordingly, the focal point of the radio wave lens 130 is aligned with a center (point on the central axis C) of the centers of the transmitting antenna 120Tx and the receiving antenna 120Rx on the surface of the substrate 121 on +Y direction side.

The strength of radio waves (transmitted waves) radiated from the transmitting antenna 120Tx is strongest in a direction connecting the center of the transmitting antenna 120Tx and the center of the radio wave lens 130. The strength of radio waves (received waves) received by the receiving antenna 120Rx is strongest in the direction connecting the center of the receiving antenna 120Rx and the center of the radio wave lens 130. The center of the radio wave lens 130 is, on the optical axis (central axis C of the waveguide 110) of the radio wave lens 130, positioned at a center of the thickness of the radio wave lens 130 in the Y direction.

<Structure of Radio Wave Lens 130>

The radio wave lens 130 is a lens that can bidirectionally focus radio waves transmitted by the transmitting antenna 120Tx and radio waves received by the receiving antenna 120Rx, and for example, the radio wave lens 130 is a circular biconvex lens in plan view. However, the radio wave lens 130 may be a plano-convex lens. Such biconvex lens and plano-convex lens are example convex lenses.

The radio wave lens 130 has surfaces 130A and 130B. The surface 130A is an example first surface, and is a surface of the radio wave lens 130 on the -Y direction side. The surface 130B is an example second surface, and is a surface of the radio wave lens 130 on the +Y direction side. The surface 130A is located inside the radar apparatus 100. The surface 130A is located inside the radar apparatus 100 means that the surface 130A is located in a space surrounded by the board 101, the waveguide 110, and the radio wave lens 130. The surface 130A is not directly exposed to the outside air. The surface 130B is part of an outer surface of the radar apparatus 100.

The radio wave lens 130 has concave portions 131A and convex portions 132A provided to the surface 130A to reduce multiple-reflected waves, as illustrated in Fig. 1B and Fig. 1D. The concave portions 131A and the convex portions 132A are part of the surface 130A. The concave portions 131a and the convex portions 132A function as an anti-reflection (AR) layer. The concave portions 131A and the convex portions 132A are provided concentrically in plan view around the optical axis of the radio wave lens 130, and are provided at equal pitches, for example. It should be noted that, unlike the surface 130A, the surface 130B is a continuous curved surface that has neither the concave portions 131A nor the convex portions 132A.

For example, on the center side of the radio wave lens 130 on which the optical axis is located, a plurality of concave portions 131A are provided concentrically around the optical axis in plan view, and on the outer side with respect to the center side, a plurality of convex portion 132A are provided concentrically around the optical axis in plan view. In the radial direction of the radio wave lens 130, a boundary between the center side, on which the plurality of concave portions 131A are provided, and the outer side, on which the plurality of convex portions 132A are provided, is indicated as a boundary portion 133A. The boundary portion 133A has neither the concave portions 131A nor the convex portions 132A.

The depth of each of the concave portions 131A and the height of each of the convex portions 132A are set to a depth and a height respectively at the surface 130A of the radio wave lens 130 such that a first reflected wave that is a radio wave among radio waves that come from the surface 130A side with respect to the radio wave lens 130 and is reflected at the surface 130A, and a second reflected wave that is a radio wave among radio waves that pass through the surface 130A, is reflected at the rear side of the surface 130B, and reaches the surface 130A, are canceled. It should be noted that the depth of the concave portion 131A is a depth of the concave portion 131A recessed in the +Y direction with respect to the portion of the surface 130A in which neither the concave portions 131 nor the convex portions 132A are provided. The height of the convex portion 132A is a height of the convex portion 132A protruding in the -Y direction with respect to the portion of the surface 130A in which neither the concave portions 131 nor the convex portions 132A are provided.

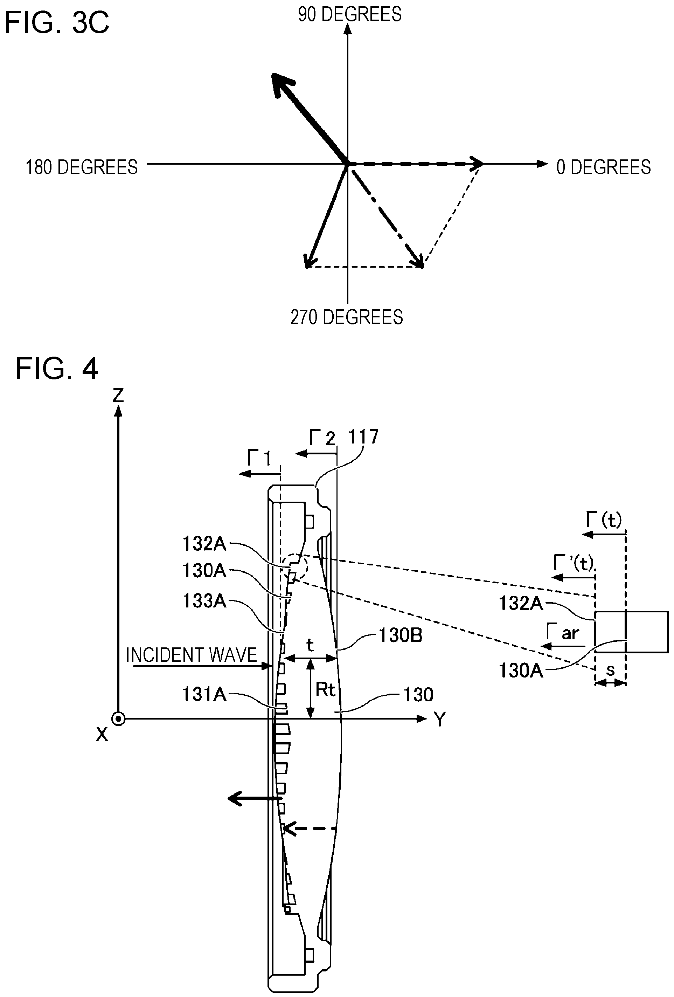

The depths of the concave portions 131A are set to become deeper as the portions are closer to the optical axis, and the heights of the convex portions 132A are set to become higher as the portions are further from the optical axis. This structure is described below in detail with reference to Fig. 4.

It should be noted that the concave portions 131A and the convex portions 132A are not necessarily at equal pitches as long as they are concentric. In addition, the relative positions of the plurality of concave portions 131A and the plurality of convex portions 132A may be reversed in the radial direction. In other words, on the center side on which the optical axis of the radio wave lens 130 is located, the plurality of convex portions 132A may be provided concentrically around the optical axis in plan view, and on the outer side with respect to the center side, the plurality of concave portions 131A may be provided concentrically around the optical axis in plan view.

In addition, the concave portions 131A and the convex portions 132A may be provided symmetrically in plan view with respect to the optical axis of the radio wave lens 130. Here, as an example, as illustrated in Fig. 1D, the concave portions 131A and the convex portions 132A have a circular shape in plan view and are provided concentrically in plan view around the optical axis of the radio wave lens 130. However, for example, the concave portions 131A and the convex portions 132A may be concave portions (grooves) or convex portions that are formed in a grid pattern in plan view around the optical axis of the radio wave lens 130, or may be concave portions (grooves) or convex portions or the like that form a shape made of regular polygons disposed without gaps.

<Reasons for Multiple Reflections>

Fig. 2A to Fig. 2D are diagrams explaining example reasons for multiple reflections occurring in a comparative radio wave lens 13. Fig. 2A is a diagram of the comparative radio wave lens 13. The comparative radio wave lens 13 has surfaces 13A and 13B. Unlike the radio wave lens 130 according to the embodiment, the comparative radio wave lens 13 has neither the concave portions 131A nor the convex portions 132A, and the surfaces 13A and 13B are continuous curved surfaces. The XYZ coordinates in Fig. 2A are similar to the XYZ coordinates in Fig. 1A to Fig. 1D, and the optical axis of the comparative radio wave lens 13 is aligned with the Y axis.

Fig. 2A illustrates, in the surface 13A of the radio wave lens 13, a first reflected wave, which is a radio wave reflected at the surface 13A among radio waves coming from the surface 13A side to the radio wave lens 13, indicated by the solid line. Fig. 2A also illustrates a second reflected wave, which is a radio wave among radio waves coming from the surface 13A side to the radio wave lens 13, passes through the surface 13A, is reflected at the rear side of the surface 13B, and reaches the surface 13A, indicated by the broken line. Such first reflected wave and second reflected wave overlap at the surface 130A.

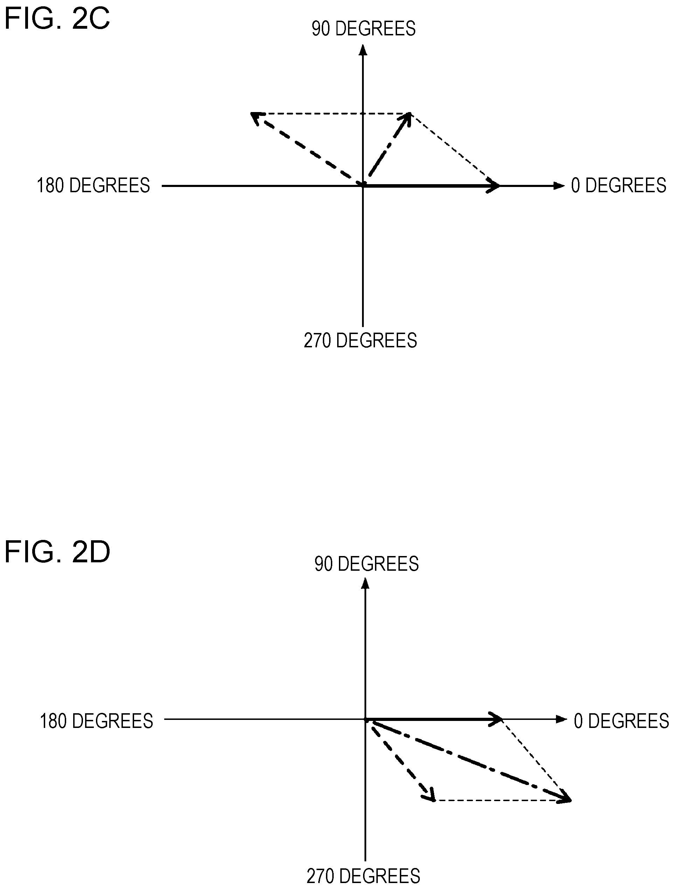

Fig. 2B to Fig. 2D illustrate the first reflected waves (solid lines) and the second reflected waves (broken lines) as vectors. More specifically, the phases of the vectors of the second reflected waves when the phases of the first reflected waves are set to 0 degrees are illustrated. Fig. 2C and Fig. 2D illustrate the phases of the vectors of the composite waves of the first reflected waves (solid lines) and the second reflected waves (broken lines) with alternating long and short dashed lines.

In Fig. 2B, the phases of the first reflected wave and the second reflected wave are 180 degrees out of phase. In such a case, the magnitude of the vector of the composite wave of the first reflected wave and the second reflected wave becomes zero, and the first reflected wave and the second reflected wave cancel each other out at the surface 13A. When the first reflected wave and the second reflected wave cancel each other out at the surface 13A, no composite wave is generated at the surface 13A, thereby suppressing multiple reflections.

The state in which the phases of the first reflected wave and the second reflected wave are 180 degrees out of phase as illustrated in Fig. 2B is obtained when the distance (the round-trip distance of the second reflected wave from the surface 13A to the surface 13B) equal to twice the thickness of the comparative radio wave lens 13 in the Y direction is equal to half ($\lambda e/2$) of the electrical length $\lambda e$ of the radio wave in the radio wave lens 13. This relationship can be obtained only in a small portion of the entire comparative radio wave lens 13, and this relationship may not be obtained in some portions.

In Fig. 2C, the phase of the second reflected wave is approximately 150 degrees, producing a resultant vector (alternating long and short dashed lines) of the first reflected wave and the second reflected wave. In Fig. 2D, the phase of the second reflected wave is approximately 300 degrees, producing a resultant vector (alternating long and short dashed lines) of the first reflected wave and the second reflected wave. When such composite waves of the first reflected wave and the second reflected wave are produced, multiple reflections may occur due to the composite waves, and multiple reflections cannot be reduced.

<Principle of Reducing Multiple Reflections by using Radio Wave Lens 130 of Embodiment>

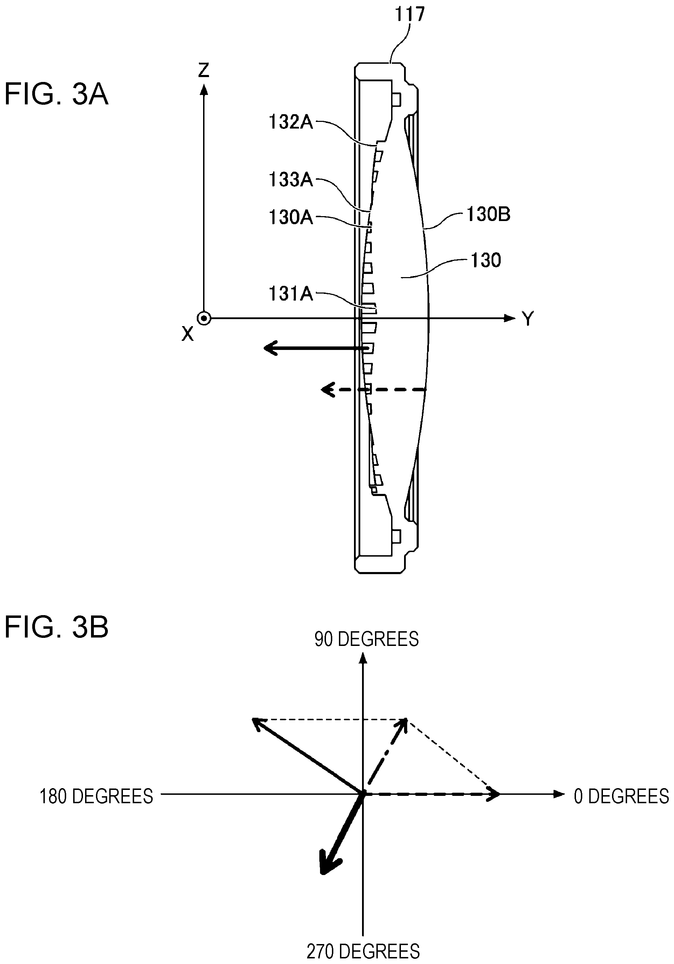

Fig. 3A to Fig. 3C are diagrams explaining one example principle of reducing multiple reflections by using the radio wave lens 130 according to the embodiment. The XYZ coordinates in Fig. 3A is the same as the XYZ coordinates in Fig. 1A to Fig. 1D, the origin is aligned with the center of the aperture 111, and the optical axis of the radio wave lens 130 is aligned with the Y axis.

Fig. 3A illustrates a first reflected wave, which is a radio wave reflected at a portion of the surface 130A of the radio wave lens 130 other than the concave portions 131A and the convex portions 132A among radio waves that come from the surface 130A side to the radio wave lens 130, indicated by the solid line. The first reflected wave indicated by the solid line is equal to the first reflected wave reflected at the surface 13A of the comparative radio wave lens 13. Fig. 3A also illustrates a second reflected wave, which is a radio wave among radio waves coming from the surface 130A side to the radio wave lens 130, passes through a portion of the surface 130A other than the concave portions 131A and the convex portions 132A, is reflected at the rear side of the surface 130B, and reaches the surface 130A, indicated by the broken line. Such first reflected wave and the second reflected wave overlap at the surface 130A.

Fig. 3B and Fig. 3C illustrate the phases of the vectors of the second reflected waves when the phase of the first reflected wave is set to 0 degrees. Fig. 3B and Fig. 3C also illustrate the phases of the vectors of the composite waves of the first reflected waves (solid lines) and the second reflected waves (broken lines) with alternating long and short dashed lines.

In Fig. 3B, similarly to Fig. 2C, the phase of the second reflected wave that passes through a portion of the surface 130A other than the concave portions 131A and the convex portions 132A is approximately 150 degrees, producing a resultant vector (alternating long and short dashed lines) of the first reflected wave and the second reflected wave. In this case, at the concave portions 131A and the convex portions 132A, if a first reflected wave that has a vector (thick solid line) with a phase difference of 180 degrees from the resultant vector is obtained, it is possible to suppress the generation of composite waves at the surface 130A and reduce multiple reflections.

In Fig. 3C, the phase of the second reflected wave that passes through a portion of the surface 130A other than the concave portions 131A and the convex portions 132A is approximately 300 degrees, producing a resultant vector (alternating long and short dashed lines) of the first reflected wave and the second reflected wave. In this case, at the concave portions 131A and the convex portions 132A, if a first reflected wave that has a vector (thick solid line) with a phase difference of 180 degrees from the resultant vector is obtained, it is possible to suppress the generation of composite waves at the surface 130A and reduce multiple reflections.

<Depth of Concave Portions 131A and Height of Convex Portions 132A>

A method of calculating the depth of the concave portions 131A and the height of the convex portions 132A will be described.

The reflection coefficient of the surface 130A of the radio wave lens 130 can be expressed by the following Equation (1), where Zr is the propagation impedance of radio waves inside the radio wave lens 130, and Z0 is the propagation impedance of radio waves in air.

Equation 1

$$\Gamma = (Zr - Zo) / (Zr + Zo) \qquad (1)$$

Here, Z0 is expressed by the following Equation (2).

Equation 2

$$Z0 = \sqrt{(\mu o / \varepsilon o)} = 120\pi \qquad (2)$$

Here, by using Z0, Zr is expressed by the following Equation (3).

Equation 3

$$Zr = Zo / \sqrt{\varepsilon r} \qquad (3)$$

where $\mu o$ is the magnetic permeability of air, $\varepsilon o$ is the dielectric constant of air, and $\varepsilon r$ is the relative permittivity of the material of the radio wave lens 130.

Using Equations (1) to (3), the reflection coefficient $\Gamma 1$ when the radio wave emitted from the transmitting antenna 120Tx in the +Y direction is reflected at the surface 130A of the radio wave lens 130 can be expressed by the following Equation (4).

Equation 4

$$\Gamma 1 = (Zr - Zo)/(Zr + Zo) = (1 - \sqrt{\varepsilon r})/(1 + \sqrt{\varepsilon r}) \qquad (4)$$

The reflection coefficient $\gamma 2$ when the radio wave emitted from the transmitting antenna 120Tx in the +Y direction passes through the surface 130A of the radio wave lens 130 and is reflected at the rear side (-Y direction side) of the surface 130B can be expressed by the following Equation (5).

Equation 5

$$\Gamma 2 = (Zo - Zr)/(Zo + Zr) = (\sqrt{\varepsilon r} - 1)/(1 + \sqrt{\varepsilon r}) = -\Gamma 1 \qquad (5)$$

When an approximate calculation is performed by ignoring the propagation loss inside the radio wave lens 130 and the reflection loss at the surface 130A and the rear side of the surface 130B, the total reflection coefficient $\Gamma 3$ of the lens in the portion of the surface 130A other than the concave portions 131A and the convex portions 132A can be expressed by the following Equation (6). Equation (6) expresses the reflection coefficient $\Gamma 3$ as a function of the thickness t of the radio wave lens 130. Specifically, the reflection coefficient $\Gamma 3(t)$ expressed in Equation (6) is the comprehensive reflection coefficient that considers the reflection coefficients $\Gamma 1$ and $\Gamma 2$ in a portion of the radio wave lens 130 of thickness t. Here, $\lambda$ is the wavelength of the radio wave in free space. In addition, $\exp[(j2\pi/\lambda)\cdot 2t]$ represents the phase generated by the radio wave traveling back and forth through the portion of thickness t.

Equation 6

$$\Gamma 3(t) \fallingdotseq \Gamma 1 + \Gamma 2 \cdot \exp[(j2\pi/\lambda) \cdot 2t] = \Gamma 1\{1 - \exp(j4\pi t/\lambda)\} \qquad (6)$$

Here, the thickness t and other details of the radio wave lens 130 will be described with reference to Fig. 4. Fig. 4 is a diagram explaining the thickness t and other details of the radio wave lens 130. The XYZ coordinates in Fig. 4 is the same as the XYZ coordinates in Fig. 1A to Fig. 1D and Fig. 3A, the origin is aligned with the center of the aperture 111, and the optical axis of the radio wave lens 130 is aligned with the Y axis.

As illustrated in Fig. 4, the thickness t of the radio wave lens 130 is a thickness of the radio wave lens 130 in the Y direction at a position Rt from the central axis in a portion of the surface 130A other than the concave portions 131A and the convex portions 132A. In other words, the thickness t of the radio wave lens 130 is, at the position Rt from the central axis, a thickness of the portion in the Y direction excluding the depth of the concave portion 131A and the height of the convex portion 132A. Rt represents the position of the portion of thickness t in the radial direction. In the case of a symmetrical double-convex spherical lens, Rt can be calculated by using the diameter and curvature radius of the radio wave lens 130.

The portion of the convex portion 132A indicated by the broken line in Fig. 4 is enlarged and illustrated on the right side. The height of the convex portion 132A with respect to the surface 130A is denoted as s. The height s of the convex portion 132A takes a positive value. On the surface 130A of the radio wave lens 130, if radio waves that are reflected at the surfaces of the convex portions 132A and radio waves (including reflected waves reflected at the rear side of the reflection surface 130B) that are reflected in the -Y direction from the portions of the surface 130A other than the concave portions 131A and the convex portions 132A cancel each other out, composite waves can be suppressed from being generated at the surface 130A, as illustrated in Fig. 3B and Fig. 3C. To achieve this, the height s of the convex portion 132A should satisfy the condition expressed by the following Equation (7).

Equation 7

$$\Gamma ar = -\Gamma 3'(t) = -\Gamma 3(t) \cdot \exp[(j2\pi/\lambda) \cdot s] \qquad (7)$$

In Equation (7), $\Gamma$ar is the reflection coefficient of radio waves at the surface of the convex portion 132A. $\Gamma 3'(t)$ is obtained by multiplying $\Gamma 3(t)$ in Equation (6) by the attenuation coefficient corresponding to the height s of the convex portion 132A. Due to errors caused by the dielectric constant and dielectric loss of the lens material of the radio wave lens 130, Equation (7) requires consideration of such errors depending on the characteristics of the material used. As an example, Equation (7) includes an error of approximately $\pm 5\%$ for materials with low relative permittivity and low dielectric loss, and may include an error of approximately 20% to 30% for materials with high relative permittivity and high dielectric loss. In Equation (7), $\exp[(j2n/\lambda) \cdot s$ represents the phase generated when the radio wave propagates through the portion of height s.

As described above, if the height s of the convex portion 132A satisfies Equation (7), as illustrated in Fig. 3B and Fig. 3C, it is possible to suppress the generation of a composite wave at the surface 130A, thereby reducing multiple reflections.

Regarding Equation (7), although it has been explained that s takes a positive value for the height of the convex portion 132A, regarding the depth of the concave portion 131A, by setting s to a negative value, the depth of the concave portion 131A may be calculated to reduce multiple reflections similarly to the height s of the convex portion 132A.

<Experimental Results>

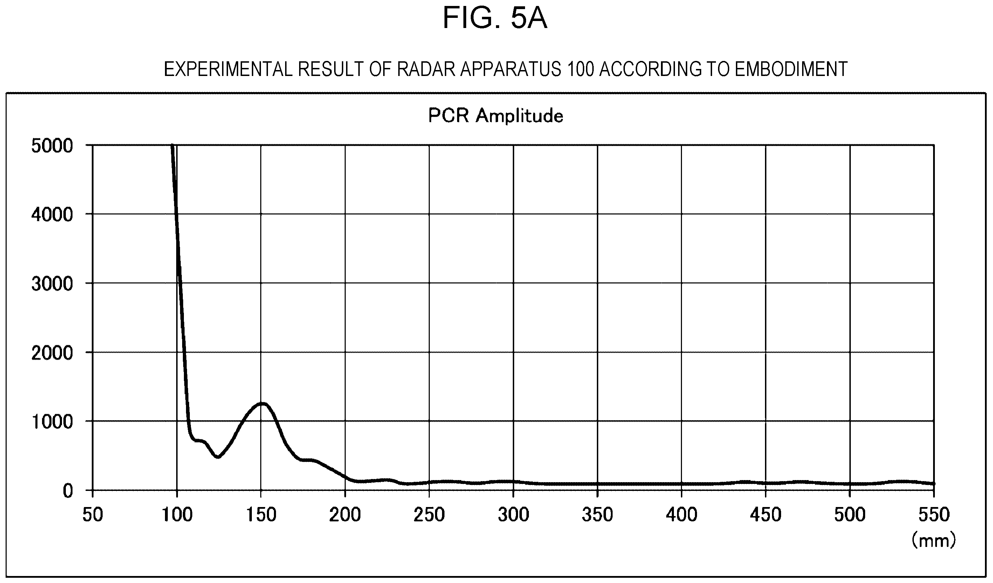

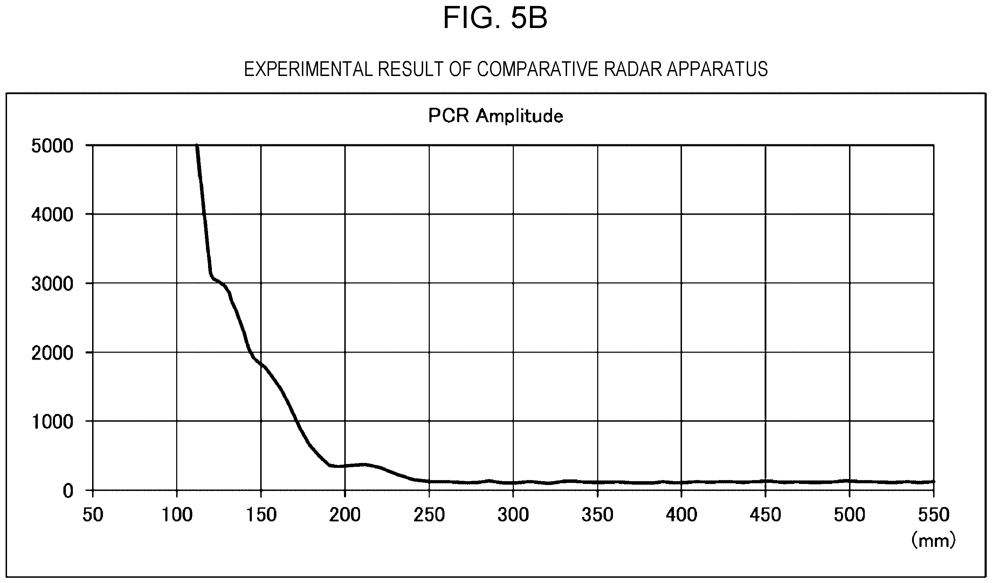

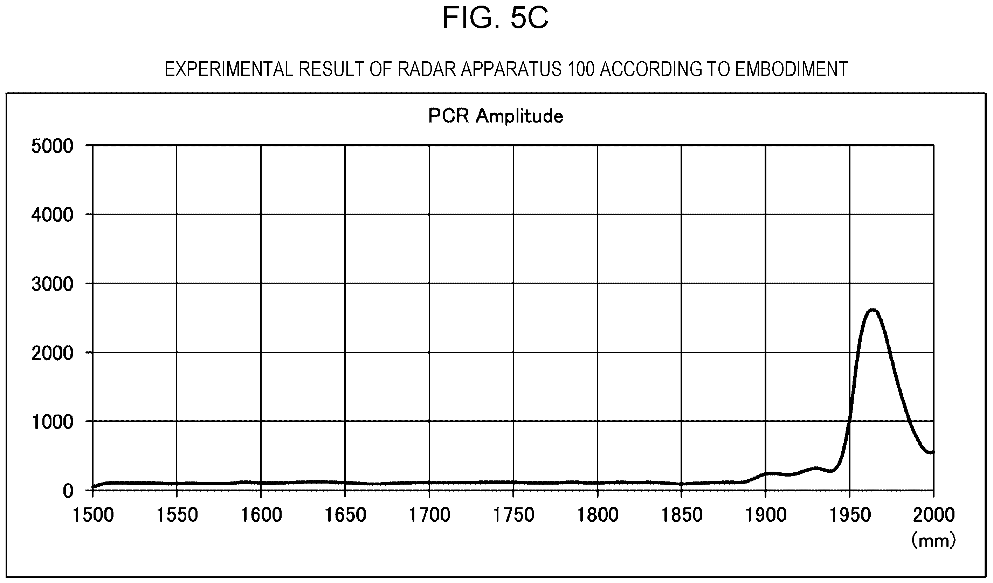

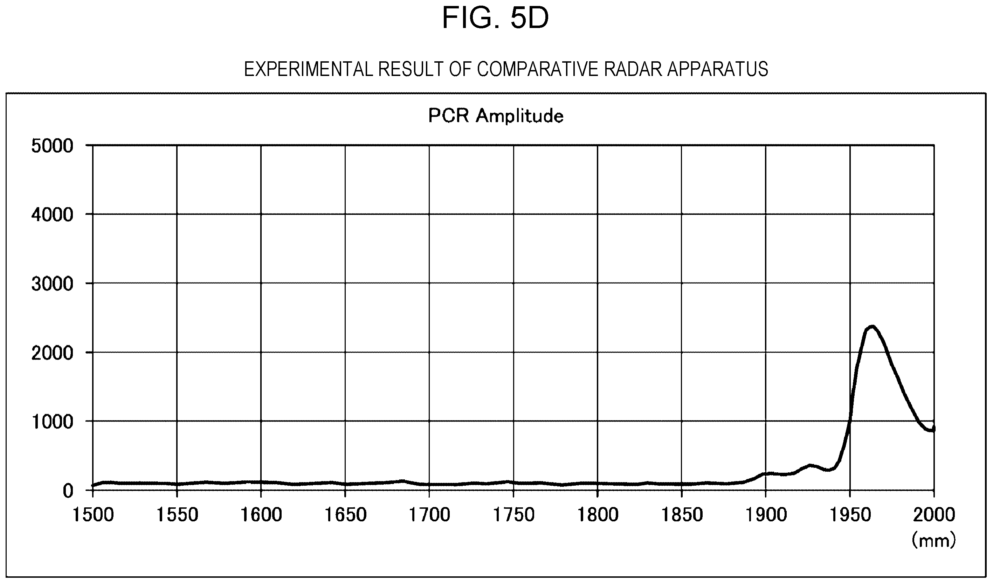

The experimental results shown in Fig. 5A and Fig. 5C are examples of output strengths of radar detection signals with respect to distances between the radar apparatus 100 and a measurement target received by the receiving antenna 120Rx. Fig. 5B and Fig. 5D show example experimental results obtained with a comparative radar apparatus. The comparative radar apparatus had a structure in which the radio wave lens 130 of the radar apparatus 100 was replaced with the comparative radio wave lens 13 in Fig. 2A.

In Fig. 5A to Fig. 5D, the horizontal axis represents the distance (mm) between the radar apparatus 100 and the comparative radar apparatus and the measurement target, and the vertical axis represents the output strength (Unit: None) of the radar detection signals of the radar apparatus 100 and the comparative radar apparatus. The output strength of the radar detection signals is not limited to the strength of the received waves, but possibly includes the strength of multiple-reflected waves.

Fig. 5A to Fig. 5D show, as an example, the output strength of the radar detection signals received by the receiving antennas 120Rx of the radar apparatus 100 and the comparative radar apparatus, when the measurement target was located at a position 1970 mm away to show the output strength of the radar detection signals with the measurement target provided. Fig. 5A and Fig. 5B show the output strength of the radar detection signals at a short-range side at distances from 0 mm to 550 mm, and Fig. 5C and Fig. 5D show the output strength of the radar detection signals at a long-range side at distances from 1500 mm to 2000 mm.

When comparing Fig. 5A and Fig. 5B, it can be seen that the output strength of the radar detection signal of the radar apparatus 100 in Fig. 5A was lower than the output strength of the radar detection signal of the comparative example radar apparatus in Fig. 5B at the short-range side. As an example, if it is assumed that the measurement target can be detected when the output strength of the radar detection signal is 1500 or less, the comparative radar apparatus can measure only up to approximately 170 mm as shown in Fig. 5B, whereas the radar apparatus 100 according to the embodiment can measure in a short range up to approximately 110 mm as shown in Fig. 5A. When comparing the output strength of the radar detection signals within the range of approximately 110 mm to approximately 170 mm, it can be confirmed that the output strength of the radar detection signal of the radar apparatus 100 according to the embodiment was greatly reduced compared to the output strength of the radar detection signal of the comparative example radar apparatus. This shows that multiple reflections were greatly reduced by the AR layer provided by the concave portions 131A and the convex portions 132A.

In addition, when comparing Fig. 5C and Fig. 5D, it can be confirmed that, compared with the output strength of the radar detection signal of the comparative radar apparatus shown in Fig. 5D, the peak value of the output strength of the radar detection signal of the radar apparatus 100 according to the embodiment shown in Fig. 5C increased at 1970 mm at which the measurement target was located, and the output strength of the radar detection signal on the side further than 1970 mm decreased, and multiple reflections with respect to the reflections from the measurement target also decreased. This shows that multiple reflections were greatly reduced by the AR layer provided by the concave portions 131A and the convex portions 132A, and radio waves from the measurement target that directly reached the receiving antenna 120Rx without reflection increased.

As described above, the experimental results shown in Fig. 5A to Fig. 5D reveal that the radar apparatus 100, which included the radio wave lens 130 including the concave portions 131A and the convex portions 132A that provided the AR layer in addition to the radio wave lens 13 of the comparative radar apparatus, greatly reduced the effect of multiple-reflected waves and greatly shortened the minimum detection distance from 170 mm to 110 mm. In addition, the output strength of the radar detection signal in detecting the measurement target was also increased. In other words, it has been confirmed that the detection performance can be increased greatly by suppressing multiple-reflected waves by using the radio wave lens 130, which has the additional concave portions 131A and convex portions 132A that provide the AR layer. In addition, the output strength of the radar detection signal in detecting the measurement target was also increased.

<Simulation Results of gains of Receiving Antenna 120Rx>

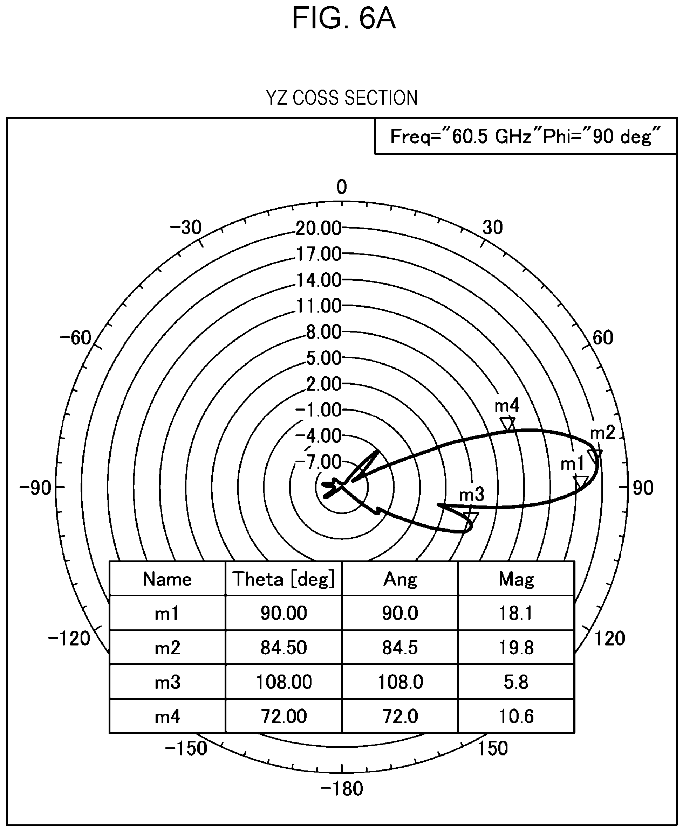

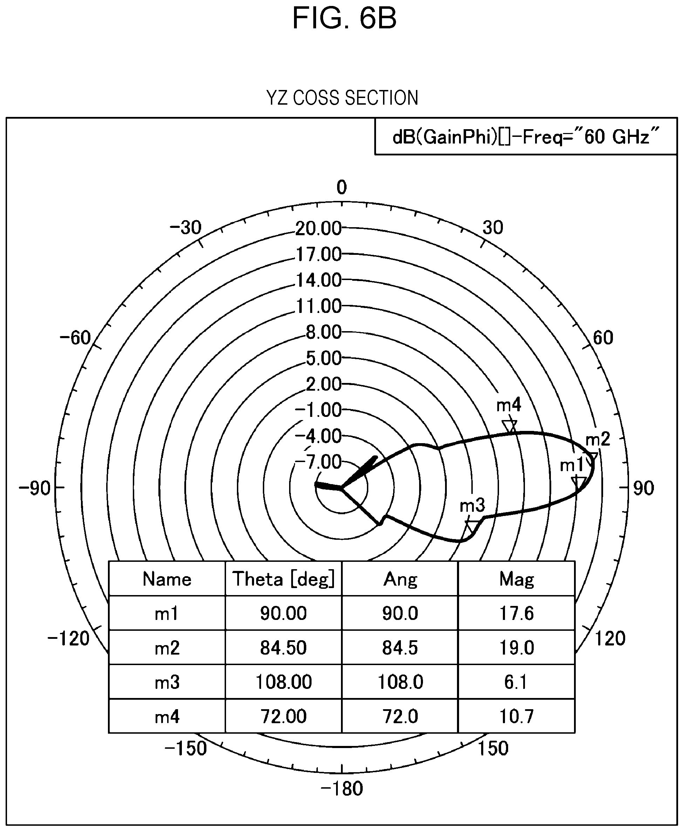

Fig. 6A and Fig. 6B are diagrams of example simulation results of gains of the receiving antenna 120Rx. Fig. 6A is a diagram of an example simulation result of gains of the receiving antenna 120Rx of the radar apparatus 100 according to the embodiment. Fig. 6B is a diagram of an example simulation result of gains of the receiving antenna 120Rx of the comparative radar apparatus. The comparative radar apparatus, the comparative radar apparatus had a structure in which the radio wave lens 130 of the radar apparatus 100 was replaced with the comparative radio wave lens 13 in Fig. 2A.

In Fig. 6A and Fig. 6B, the direction of 90 degrees corresponds to the +Y direction. The gain (maximum value) of the receiving antenna 120Rx of the radar apparatus 100 according to the embodiment was 19.0 dBi, as shown in Fig. 6A, whereas the gain (maximum value) of the receiving antenna 120Rx of the comparative radar apparatus was 18.1 dBi. From these results, it has been confirmed that the gain of the receiving antenna 120Rx increased by suppressing multiple-reflected waves by using the radio wave lens 130, which had the additional concave portions 131A and convex portions 132A that provided the AR layer. It seems that multiple reflections were reduced and radio waves from the measurement target that directly reached the receiving antenna 120Rx without reflection increased.

<Modifications of Radio Wave Lens 130>

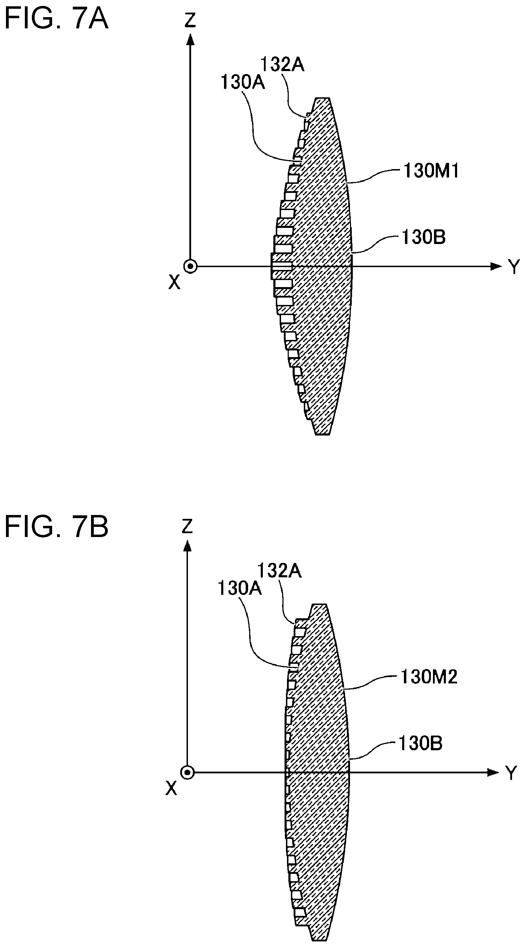

Fig. 7A and Fig. 7B are diagrams of example structures of radio wave lenses 130M1 and M2 according to modifications. In the radio wave lens 130M1 illustrated in Fig. 7A, the surface 130A has the convex portions 132A that are provided concentrically around the optical axis, and the height of the convex portions 132A increases as the portions are closer to the optical axis. If the heights s of the plurality of concentric convex portions 132 are set to satisfy the above-described Equation (7), multiple reflections can be reduced in the same manner as the radio wave lens 130 shown in Fig. 1A to Fig. 1D, Fig. 3A, and Fig. 4A.

It should be noted that the radio wave lens 130M1 may have the concave portions 131A instead of the convex portions 132A. In such a case, the surface 130A of the radio wave lens 130M1 may have the concave portions 131A provided concentrically around the optical axis, and the depths of the concave portions 131A may increase as the portions are closer to the optical axis. The depth s of each of the plurality of concentric concave portions 131A may be set to satisfy the above-described Equation (7).

In the radio wave lens 130M2 illustrated in Fig. 7B, the surface 130A has the convex portions 132A that are provided concentrically around the optical axis, and the height of the convex portions 132A decreases as the portions are closer to the optical axis. If the heights s of the plurality of concentric convex portions 132 are set to satisfy the above-described Equation (7), multiple reflections can be reduced in the same manner as the radio wave lens 130 shown in Fig. 1A to Fig. 1D, Fig. 3A, and Fig. 4A.

It should be noted that the radio wave lens 130M2 may have the concave portions 131A instead of the convex portions 132A. In such a case, the surface 130A of the radio wave lens 130M1 may have the concave portions 131A provided concentrically around the optical axis, and the depths of the concave portions 131A may decrease as the portions are closer to the optical axis. The depth s of each of the plurality of concentric concave portions 131A may be set to satisfy the above-described Equation (7).

The radio wave lenses 130 illustrated in Fig. 1A to Fig. 1D, Fig. 3A, and Fig. 4A can be made smaller in volume and lighter in weight than the radio wave lenses 130M1 and 130M2 illustrated in Fig. 7A and Fig. 7B by having both of the concave portions 131A and the convex portions 132A.

<Advantages>

The radio wave lens 130 has the surface 130A (first surface), the surface 130B (second surface), and the optical axis that passes through the surface 130A and the surface 130B. The surface 130A has the concave portions 131A or the convex portions 132A that are provided concentrically or symmetrically with respect to the optical axis in plan view. The depth of each of the concave portions 131A or the height of each of the convex portions 132A is set according to the distance from the optical axis. With this structure, by using the concave portions 131A that have the depths set according to the distance from the optical axis and convex portions 132A that have the heights set according to the distance from the optical axis, the first reflected wave reflected at the surface 130A and the second reflected wave reflected at the rear side of the surface 130B can be weaken each other, reducing the reflected waves that may cause multiple reflections. In addition, the surface 130A is located in the space surrounded by the board 101, the waveguide 110, and the radio wave lens 130, suppressing dust from readily adhering to the surface 130A.

Accordingly, the radio wave lens 130 resistant to dust adhesion on one surface and capable of sufficiently reducing reflection can be provided.

The depth of each of the concave portions 131A or the height of each of the convex portions 132A may be set, at the surface 130A of the radio wave lens 130, to a depth or a height such that the first reflected wave that is a radio wave among radio waves that come from the surface 130A side with respect to the radio wave lens 130 and is reflected at the surface 130A, and the second reflected wave that is a radio wave among radio waves, passes through the surface 130A, is reflected at the rear side of the surface 130B, and reaches the surface 130A, are canceled. With this structure, by using the concave portions 131A or the convex portions 132A, the first reflected wave reflected at the surface 130A and the second reflected wave reflected at the rear side of the surface 130B can be canceled each other out, reducing the reflected waves that may cause multiple reflections.

Accordingly, the radio wave lens 130 resistant to dust adhesion on one surface and capable of sufficiently and more effectively reducing reflection can be provided.

The surface 130A may have the concave portions 131A and the convex portions 132A provided concentrically around the optical axis in plan view of the surface 130A, the convex portions 132A may be provided on the center side around the optical axis, and the concave portions 131A may be provided on the outer side with respect to the center side, on the center side, the heights of the convex portions 132A may increase as the convex portions 132A are closer to the optical axis, and, on the outer side with respect to the center side, the depths of the concave portions 131A may increase as the concave portions 131A are further from the optical axis, or the concave portions 131A may be provided on the center side around the optical axis, and the convex portions 132A may be provided on the outer side with respect to the center side, on the center side, the depths of the concave portions 131A may increase as the concave portions 131A are closer to the optical axis, and, on the outer side with respect to the center side, the heights of the convex portions 132A may increase as the convex portions are further from the optical axis. With the concave portions 131A having regular depths and the convex portions 132A having regular heights set according to the distance from the optical axis, by using the concave portions 131A and the convex portions 132A, the first reflected wave reflected at the surface 130A and the second reflected wave reflected at the rear side of the surface 130B can be canceled each other out, reducing the reflected waves that may cause multiple reflections. In addition, since both of the concave portions 131A and the convex portions 132A are included, the volume can be reduced and the weight can be reduced.

The surface 130A may have the concave portions 131A or the convex portions 132A provided concentrically around the optical axis, and the depths of the concave portions 131A may increase as the concave portions 131A are closer to the optical axis, or the heights of the convex portions 132A may increase as the convex portions 132A are closer to the optical axis. With the concave portions 131A having regular depths and the convex portions 132A having regular heights set according to the distance from the optical axis, by using the concave portions 131A and the convex portions 132A, the first reflected wave reflected at the surface 130A and the second reflected wave reflected at the rear side of the surface 130B can be canceled each other out, reducing the reflected waves that may cause multiple reflections.

The surface 130A may have the concave portions 131A or the convex portions 132A provided concentrically around the optical axis, and the depths of the concave portions 131A may decrease as the concave portions 131A are closer to the optical axis, or the heights of the convex portions 132A may decrease as the convex portions 132A are closer to the optical axis. With the concave portions 131A having regular depths and the convex portions 132A having regular heights set according to the distance from the optical axis, by using the concave portions 131A and the convex portions 132A, the first reflected wave reflected at the surface 130A and the second reflected wave reflected at the rear side of the surface 130B can be canceled each other out, reducing the reflected waves that may cause multiple reflections.

The concave portions 131A or the convex portions 132A may be provided at equal pitches in the radial direction with respect to the optical axis. With the concave portions 131A having regular depths and the convex portions 132A having regular heights set according to the distance with the equal pitch from the optical axis, by using the concave portions 131A and the convex portions 132A, the first reflected wave reflected at the surface 130A and the second reflected wave reflected at the rear side of the surface 130B can be canceled each other out, reducing the reflected waves that may cause multiple reflections.

The depth s (s < 0) of each of the concave portions, or the height s (s > 0) of each of the convex portions may be expressed by the following Equation (8), where F3(t) is the reflection coefficient of the first reflected wave and the second reflected wave at the portion of the first surface other than the concave portions and the convex portions, t is the thickness of the portion of the first surface other than the concave portions and the convex portions, $\lambda$ is the wavelength of the radio wave in free space, and $\Gamma$ar is the reflection coefficient of the radio wave at the surface of the concave portions or the convex portions.

Equation 8

$$\Gamma ar = -\Gamma 3(t) \cdot \exp[(j2\pi/\lambda) \cdot s] \qquad (8)$$

According to Equation (8), by using the concave portions 131A of set depths s, or the convex portions 132A of set heights s, the first reflected wave reflected at the surface 130A and the second reflected wave reflected at the rear side of the surface 130B can be weakened each other, reducing the reflected waves that may cause multiple reflections with high accuracy. Due to errors caused by the dielectric constant and dielectric loss of the lens material of the radio wave lens 130, Equation (8) requires consideration of such errors depending on the characteristics of the material used. As an example, Equation (8) includes an error of approximately $\pm 5\%$ for materials with low relative permittivity and low dielectric loss, and may include an error of approximately 20% to 30% for materials with high relative permittivity and high dielectric loss. In Equation (8), $\exp[(j2\pi/\lambda)\cdot s$ represents the phase generated when the radio wave propagates through the portion of height s.

Accordingly, the radio wave lens 130 resistant to dust adhesion on one surface and capable of reducing reflection with high accuracy can be provided.

The radio wave lens apparatus 100A includes the waveguide 110 having the aperture 111 (first aperture) and the aperture 112 (second aperture), and the radio wave lens 130 that is fixed to the aperture 112 in a state in which the surface 130A faces the aperture 111 side. With this structure, the concave portions 131A that have the depths set according to the distance from the optical axis and convex portions 132A that have the heights set according to the distance from the optical axis weaken the first reflected wave reflected at the surface 130A and the second reflected wave reflected at the rear side of the surface 130B each other, reducing the reflected waves that may cause multiple reflections. In addition, the surface 130A is located in the space surrounded by the board 101, the waveguide 110, and the radio wave lens 130, suppressing dust from readily adhering to the surface 130A.

Accordingly, the radio wave lens apparatus 100A resistant to dust adhesion on one surface and capable of sufficiently reducing reflection can be provided.

The radar apparatus 100 includes the board 101, the transmission/reception unit 120 (integrated circuit chip) that includes the transmitting antenna 120Tx and the receiving antenna 120Rx and is mounted on the board 101, and the radio wave lens apparatus 100A. The aperture 111 is provided on the board 101 side and surrounds the transmitting antenna 120Tx and the receiving antenna 120Rx in aperture view, and the aperture 112 is provided on the rear side with respect to the aperture 111 in the radiation direction of the transmitting antenna 120Tx. With this structure, by using the concave portions 131A that have the depths set according to the distance from the optical axis and the convex portions 132A that have the heights set according to the distance from the optical axis, the first reflected wave reflected at the surface 130A and the second reflected wave reflected at the rear side of the surface 130B can be weaken each other, reducing the reflected waves that may cause multiple reflections. In addition, the surface 130A is located in the space surrounded by the board 101, the waveguide 110, and the radio wave lens 130, suppressing dust from readily adhering to the surface 130A.

Accordingly, the radar apparatus 100 resistant to dust adhesion on one surface and capable of sufficiently reducing reflection can be provided.

While the radio wave lens, the radio wave lens apparatus, and the radar apparatus according to the exemplary embodiments of the disclosure have been described, it is to be understood that the disclosure is not limited to the embodiments disclosed specifically, and various modifications or changes may be made without departing from the scope of the claims.

This international application claims benefit of Japanese Patent Application No. 2023-008359 filed on January 23, 2023, the entire content of which is hereby incorporated by reference.

Reference Signs List

100 RADAR APPARATUS
100A RADIO WAVE LENS APPARATUS
101 BOARD
110 WAVEGUIDE
110A INNER WALL SURFACE
111 APERTURE (EXAMPLE FIRST APERTURE)
112 APERTURE (EXAMPLE SECOND APERTURE)
120 TRANSMISSION/RECEPTION UNIT (EXAMPLE INTEGRATED CIRCUIT CHIP)
120Tx TRANSMITTING ANTENNA
120Rx RECEIVING ANTENNA
121 SUBSTRATE
130 RADIO WAVE LENS
130A, 130B SURFACE
131A CONCAVE PORTION
132A CONVEX PORTION
133A BOUNDARY PORTION

**Claims**

1.  A radio wave lens comprising:

    a first surface;
    a second surface; and
    an optical axis passing through the first surface and the second surface, wherein
    the first surface has concave portions or convex portions provided concentrically or symmetrically with respect to the optical axis in plan view, and
    a depth of each of the concave portions or a height of each of the convex portions is set according to a distance from the optical axis.

2.  The radio wave lens according to claim 1, wherein
    the depth of each of the concave portions or the height of each of the convex portions is set, at the first surface of the radio wave lens, to a depth or a height such that a first reflected wave that is a radio wave among radio waves that come from the first surface side with respect to the radio wave lens and is reflected at the first surface, and a second reflected wave that is a radio wave among the radio waves, passes through the first surface, is reflected at a rear side of the second surface, and reaches the first surface, are canceled.

3.  The radio wave lens according to claim 2, wherein

    the first surface has the concave portions and the convex portions provided concentrically around the optical axis in plan view of the first surface,
    the convex portions are provided on a center side around the optical axis, and the concave portions are provided on an outer side with respect to the center side, on the center side, the heights of the convex portions increase as the convex portions are closer to the optical axis, and, on the outer side with respect to the center side, the depths of the concave portions increase as the concave portions are further from the optical axis, or
    the concave portions are provided on the center side around the optical axis, and the convex portions are provided on the outer side with respect to the center side, on the center side, the depths of the concave portions increase as the concave portions are closer to the optical axis, and, on the outer side with respect to the center side, the heights of the convex portions increase as the convex portions are further from the optical axis.

4.  The radio wave lens according to claim 2, wherein

    the first surface has the concave portions or the convex portions provided concentrically around the optical axis, and

the depths of the concave portions increase as the concave portions are closer to the optical axis, or the heights of the convex portions increase as the convex portions are closer to the optical axis.

5. The radio wave lens according to claim 2, wherein

the first surface has the concave portions or the convex portions provided concentrically around the optical axis, and
the depths of the concave portions decrease as the concave portions are closer to the optical axis, or the heights of the convex portions decrease as the convex portions are closer to the optical axis.

6. The radio wave lens according to any one of claim 3 to claim 5, wherein
the concave portions or the convex portions are provided at equal pitches in a radial direction with respect to the optical axis.

7. The radio wave lens according to any one of claim 2 to claim 6, wherein
the depth s (s < 0) of each of the concave portions, or the height s (s > 0) of each of the convex portions satisfies the following Equation (1), where F3(t) is the reflection coefficient of the first reflected wave and the second reflected wave at a portion of the first surface other than the concave portions and the convex portions, t is the thickness of the portion of the first surface other than the concave portions and the convex portions, $\lambda$ is the wavelength of the radio wave in free space, and $\Gamma$ar is the reflection coefficient of the radio wave at the surface of the concave portions or the convex portions.
Equation 1

$$\Gamma ar = -\Gamma 3(t) \cdot \exp[(j2\pi/\lambda) \cdot s] \qquad (1)$$

8. A radio wave lens apparatus comprising:

a waveguide having a first aperture and a second aperture; and
the radio wave lens according to any one of claim 1 to claim 7, the radio wave lens being fixed to the second aperture in a state in which the first surface faces the first aperture side.

9. A radar apparatus comprising:

a board;
an integrated circuit chip comprising a transmitting antenna and a receiving antenna, the integrated circuit chip being mounted on the board; and
the radio wave lens apparatus according to claim 8, wherein
the first aperture is provided on the board side, and surrounds the transmitting antenna and the receiving antenna in aperture view; and
the second aperture is provided on a rear side with respect to the first aperture in a radiation direction of the transmitting antenna.

# FIG. 1A

# FIG. 1B

# FIG. 1C

# FIG. 1D

FIG. 2A

Z

13A    13B

13

X    Y

FIG. 2B

90 DEGREES

180 DEGREES    0 DEGREES

270 DEGREES

**FIG. 2C**

90 DEGREES

180 DEGREES — 0 DEGREES

270 DEGREES

**FIG. 2D**

90 DEGREES

180 DEGREES — 0 DEGREES

270 DEGREES

FIG. 3A

FIG. 3B

FIG. 3C

90 DEGREES

180 DEGREES

0 DEGREES

270 DEGREES

FIG. 4

Z

Γ2  117

Γ1

132A
130A
133A

INCIDENT WAVE

131A

t

130B

Rt

130

Y

X

Γ(t)

Γ'(t)

132A

Γar

130A

s

# FIG. 5A

EXPERIMENTAL RESULT OF RADAR APPARATUS 100 ACCORDING TO EMBODIMENT

PCR Amplitude

EP 4 657 662 A1

# FIG. 5B

EXPERIMENTAL RESULT OF COMPARATIVE RADAR APPARATUS

PCR Amplitude

# FIG. 5C

EXPERIMENTAL RESULT OF RADAR APPARATUS 100 ACCORDING TO EMBODIMENT

PCR Amplitude

# FIG. 5D

EXPERIMENTAL RESULT OF COMPARATIVE RADAR APPARATUS

PCR Amplitude

# FIG. 6A

YZ COSS SECTION

Freq="60.5 GHz"Phi="90 deg"

| Name | Theta [deg] | Ang | Mag |
|------|-------------|------|------|
| m1 | 90.00 | 90.0 | 18.1 |
| m2 | 84.50 | 84.5 | 19.8 |
| m3 | 108.00 | 108.0 | 5.8 |
| m4 | 72.00 | 72.0 | 10.6 |

# FIG. 6B

YZ COSS SECTION

dB(GainPhi)[]-Freq="60 GHz"

| Name | Theta [deg] | Ang | Mag |
|------|-------------|-------|------|
| m1 | 90.00 | 90.0 | 17.6 |
| m2 | 84.50 | 84.5 | 19.0 |
| m3 | 108.00 | 108.0 | 6.1 |
| m4 | 72.00 | 72.0 | 10.7 |

# FIG. 7A

# FIG. 7B

## INTERNATIONAL SEARCH REPORT

| International application No. |
|---|
| **PCT/JP2023/038844** |

| A. | CLASSIFICATION OF SUBJECT MATTER |
|---|---|

*H01Q 15/02*(2006.01)i; *G01S 7/03*(2006.01)i; *H01Q 19/06*(2006.01)i
FI:   H01Q15/02; G01S7/03 230; H01Q19/06

According to International Patent Classification (IPC) or to both national classification and IPC

| B. | FIELDS SEARCHED |
|---|---|

Minimum documentation searched (classification system followed by classification symbols)

H01Q15/02; G01S7/03; H01Q19/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-175738 A (NEC PLATFORMS LTD.) 25 November 2022 (2022-11-25) paragraphs [0018]-[0027], [0065]-[0071], fig. 1, 2, 7 | 1, 8, 9 |
| A | | 2-7 |
| X | JP 2005-536929 A (AERO CORPORATION) 02 December 2005 (2005-12-02) paragraphs [0029]-[0042], fig. 6 | 1 |
| A | | 2-9 |
| A | JP 09-321533 A (NEC CORPORATION) 12 December 1997 (1997-12-12) | 1-9 |
| A | JP 59-022403 A (KOMATSU LTD.) 04 February 1984 (1984-02-04) | 1-9 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/038844**

| Patent document cited in search report | | | Publication date (day/month/year) | Patent family member(s) | | | Publication date (day/month/year) |
|---|---|---|---|---|---|---|---|
| JP | 2022-175738 | A | 25 November 2022 | (Family: none) | | | |
| JP | 2005-536929 | A | 02 December 2005 | US | 2004/0108963 | A1 | |
| | | | | paragraphs [0062]-[0078], fig. 6 | | | |
| | | | | WO | 2004/019443 | A1 | |
| | | | | CN | 1682402 | A | |
| JP | 09-321533 | A | 12 December 1997 | US | 5952984 | A | |
| | | | | EP | 0810686 | A2 | |
| | | | | CN | 1167350 | A | |
| JP | 59-022403 | A | 04 February 1984 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11355035 A

- JP 2023008359 A